# EUROPEAN PATENT SPECIFICATION

(11) **EP 4 210 298 B1**
(45) Date of publication and mention of the grant of the patent: **23.09.2026**
(21) Application number: 23150788.0
(22) Date of filing: 09.01.2023
(51) Int. Cl.: H04L 67/12, H04B 7/185, H04L 9/40, H04W 12/06, H04W 12/61, G06F 21/46, H04L 9/32, H04W 12/069

(54) **SYSTEM AND METHOD FOR PASSWORD PROTECTED DATA ACCESS FROM AN AIRCRAFT**
SYSTEM UND VERFAHREN FÜR PASSWORTGESCHÜTZ DATENZUGRIFF AUS EINEM FLUGZEUG
SYSTÈME ET PROCÉDÉ D'ACCÈS À DES DONNÉES D'UN AÉRONEF PROTÉGÉ PAR UN MOT DE PASSE

(30) Priority: 10.01.2022 US 202217572564
(43) Date of publication of application: 12.07.2023
(73) Proprietor: PRATT & WHITNEY CANADA CORP., Longueuil, Québec J4G 1A1 (CA)
(72) Inventor: FORTIN, Frederic, (01BE5) Longueuil, J4G 1A1 (CA); MILLER, Jonathan, (01BE5) Longueuil, J4G 1A1 (CA); MOOD, James, (01BE5) Longueuil, J4G 1A1 (CA); WIGNY, Robert, (01BE5) Longueuil, J4G 1A1 (CA)
(74) Representative: Dehns

(56) References cited:
- EP-A1- 2 908 494
- US-A1- 2018 097 786
- US-A1- 2020 159 941
- KEVIN KILLOURHY ET AL: "Taxonomic Rules for Password Policies: Translating the Informal to the Formal Language NIST IR 7970", 31 December 2013 (2013-12-31), pages 1 - 21, XP061055934, Retrieved from the Internet <URL:https://nvlpubs.nist.gov/nistpubs/ir/2013/NIST.IR.7970.pdf> [retrieved on 20131231], DOI: 10.6028/NIST.IR.7970
- ERIC FLEISCHMANN ET AL: "DOT/FAA/AR-08/31 Networked Local Area Networks in Aircraft: Safety, Security, and Certification Issues, and Initial Acceptance Criteria (Phases 1 and 2)", 1 November 2008 (2008-11-01), Washington DC, pages 1 - 204, XP055382024, Retrieved from the Internet <URL:https://www.faa.gov/aircraft/air_cert/design_approvals/air_software/media/AR-08-31.pdf> [retrieved on 20170615]

## Description

### TECHNICAL FIELD

The application relates generally to aircrafts and, more particularly, to data access from an aircraft.

### BACKGROUND OF THE ART

When troubleshooting malfunctions of aircraft engines or engine components, maintenance personnel generally connect a portable computing device to a data acquisition device installed on the aircraft or engine in order to retrieve data, including engine fault codes, and take appropriate corrective actions. Wired connections, such as through the use of specialized cables and other electrical connectors, are often required, which increases complexity and troubleshooting time. In addition, secured connections for data access from the aircraft may be lacking in remote locations. Therefore, there is room for improvement.

EP 2908494 A1 relates to aircraft maintenance, and more particularly a system and method for remote access to on-board aircraft systems.

US 2020/159941 A1 relates to control systems and methods to secure maintenance access to aircraft control system.

KEVIN KILLOURHY ET AL: "Taxonomic Rules for Password Policies: Translating the Informal to the Formal Language NIST IR 7970", NIST, NATIONAL INSTITUTE OF STANDARDS AND TECHNOLOGY (NIST), 31 December 2013 (2013-12-31), pages 1-21, XP061055934, DOl: 10.6028/NIST.IR.7970, relates to password policy.

### SUMMARY

In one aspect of the invention, there is provided a data access method for an aircraft as claimed in claim 1.

In another aspect of the invention, there is provided a data access system for an aircraft as claimed in claim 7.

Some embodiments of the invention are as claimed in the dependent claims thereof.

### DESCRIPTION OF THE DRAWINGS

Reference is now made to the accompanying figures in which:
FIG. 1A is a schematic cross sectional view of a gas turbine engine, in accordance with an illustrative embodiment;
FIG. 1B is a schematic of an aircraft system, in accordance with an illustrative embodiment;
FIG. 2 is a block diagram of an example computing device, in accordance with an illustrative embodiment;
FIG. 3 is a block diagram of the processing unit of FIG. 2, in accordance with an illustrative embodiment; and
FIG. 4A and FIG. 4B are flowcharts illustrating a method for providing access to data from an aircraft, in accordance with an illustrative embodiment.

It will be noticed that throughout the appended drawings, like features are identified by like reference numerals.

### DETAILED DESCRIPTION

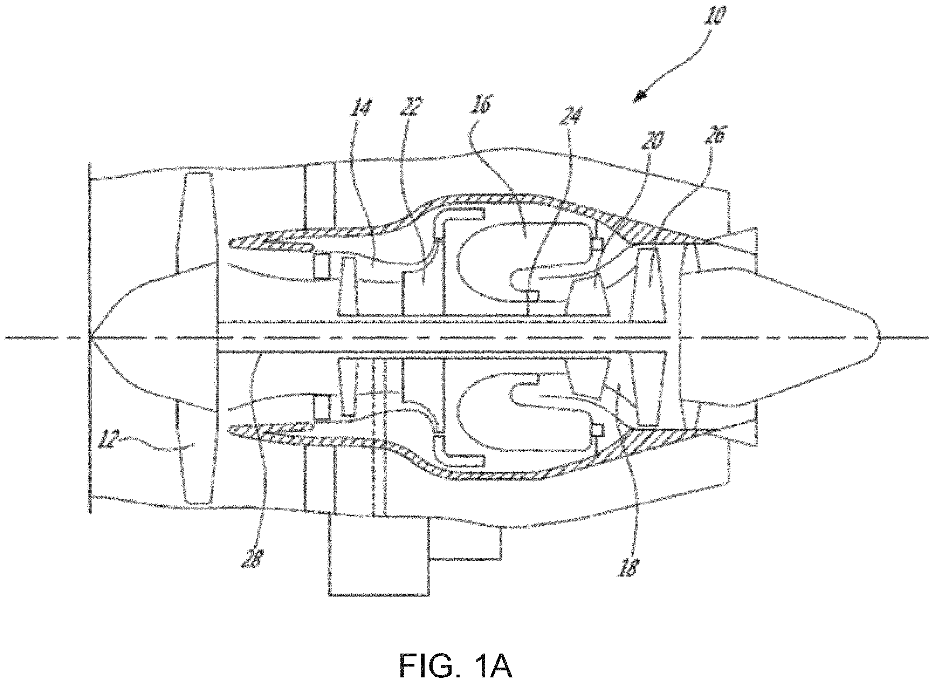

There is described herein systems and methods for providing access to data from an aircraft. The aircraft is equipped with at least one engine. FIG. 1A illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. High pressure rotor(s) 20 of the turbine section 18 are drivingly engaged to high pressure rotor(s) 22 of the compressor section 14 through a high pressure shaft 24. Low pressure rotor(s) 26 of the turbine section 18 are drivingly engaged to the fan rotor 12 and to other low pressure rotor(s) (not shown) of the compressor section 14 through a low pressure shaft 28 extending within the high pressure shaft 24 and rotating independently therefrom.

Although illustrated as a turbofan engine, the gas turbine engine 10 may alternatively be another type of engine, for example a turboshaft engine, also generally comprising in serial flow communication a compressor section, a combustor, and a turbine section, and a possible boost rotor through which ambient air is propelled. A turboprop engine may also apply. Other types of aircraft engines may also apply including, but not limited to, auxiliary power units (APUs), rotary engines, electric engines, and hybrid electric propulsion systems having a propeller driven in a hybrid architecture (series, parallel, or series/parallel) or turboelectric architecture (turboelectric or partial turboelectric).

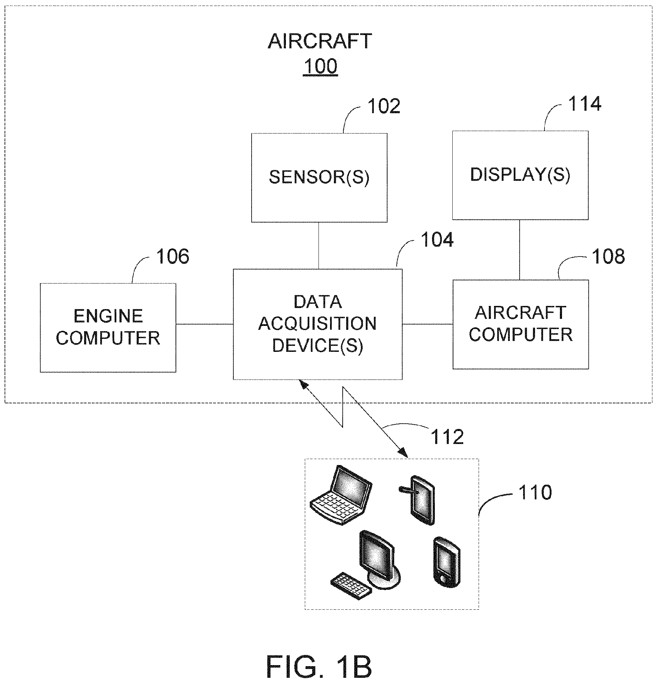

FIG. 1B illustrates an example aircraft 100, in accordance with one embodiment. At least one sensor 102 is provided per engine (reference 10 in FIG. 1A) of the aircraft 100. The sensor(s) 102 may comprise a variety of data collection devices mounted in (e.g., attached to) the engine 10 or other areas of the aircraft 100. In some embodiments, the sensor(s) 102 are mounted directly on the engine 10 and the installation may be permanent or temporary. A permanent mount may be performed during manufacture of the engine 10. When the aircraft 100 is assembled, the sensor(s) 102 may be connected to an existing aircraft harness (not shown). One or more additional cables, adapters, connectors, and/or harnesses may be added in order to connect the sensor(s) 102 to the existing aircraft harness. A temporary mount may be performed after manufacture of the engine 10 and/or after aircraft assembly, such as during aircraft maintenance.

The sensor(s) 102 may be configured to collect one or more measurements (also referred to herein as "measurement data" or "sensor data") associated with operation of the engine 10 and/or the aircraft 100. The sensor(s) 102 are configured to acquire measurement(s) of parameter(s) of the engine 10 (referred to herein as "engine parameter(s)") and/or parameter(s) aircraft 100 (referred to herein as "aircraft parameter(s)") including, but not limited to, pressure (e.g., engine inlet total pressure, interstage pressure, engine pressure ratio or EPR), temperature (e.g., engine inlet total temperature, turbine inlet temperature, interstage temperature, engine exhaust gas temperature or EGT), altitude, speed (e.g., rotor speed of the engine's low-pressure rotor and high-pressure rotor, measured in Revolutions Per Minute (RPM)), acceleration, power, and torque. The sensor(s) 102 may also be configured to acquire measurement(s) of one or more parameters describing flight and ambient conditions (e.g., ambient pressure and temperature). It should however be understood that any other suitable measurements including, but not limited to, engine bleed valve position, bleed flow, and control actuator feedback, may be collected by the sensor(s) 102. Other sensor inputs may include, but are not limited to, Radio Frequency Identification (RFID) or component configuration status data. Indeed, the parameters measured by the sensor(s) 102 may vary according to the type of the engine 10 and/or aircraft 100, and according to the application.

The sensor(s) 102 are illustratively configured to collect the one or more measurements during operation of the engine 10 and/or the aircraft 100 in-flight. The one or more measurement(s) may be collected continuously and in real-time, in order to provide a complete indication of the performance of the engine 10 and/or aircraft 100 during flight. The one or more measurement(s) may, alternatively or in addition, be collected at one or more points in time during the flight mission. In one embodiment, the measurement(s) may be acquired by the sensor(s) 102 during a stable cruise flight condition. As understood by those skilled in the art, a stable cruise condition corresponds to an operating condition of the aircraft 100 during which certain flight criteria, which may correspond to engine parameters and/or aircraft parameters, are attained. Stable cruise condition may be operator-specific. It should however be understood that the measurement(s) may be acquired by the sensor(s) 102 during any other suitable flight condition. For example, measurements(s) may be acquired during a constant climb phase of flight, which corresponds to a flight phase during which the aircraft 100 climbs to a given altitude at a constant climb rate. The measurement(s) may also be collected during operation of the engine 10 and/ or aircraft 100 on the ground, during maintenance inspections or during ground tests for instance.

The one or more measurements are then transmitted from the sensor(s) 102 to one or more aircraft- or engine-mounted electronic devices (referred to herein as "data acquisition device(s)") 104, continuously or at regular intervals, via the existing aircraft harness and/or additional cables, adapters, connectors, and/or harnesses. The Aeronautical Radio Inc. (ARINC) 429 data transfer standard for aircraft avionics may be used. Other data standards may also be used, including, but not limited to, ARINC 615, ARINC 629, ARINC 717, ARINC 664, Controller Area Network (CAN), UART RS-422, Ethernet and MIL-STD-1553. Alternatively, transmission of the data collected by the sensor(s) 102 is performed wirelessly. Therefore, the sensor(s) 102 may be configured for providing the measurement data to the data acquisition device(s) 104 via any suitable wired or wireless communication path, including RS-232, USB, USB 2.0, USB 3.0, USB-C, SATA, e-SATA, Thunderbolt^{™}, Ethernet, Wi-Fi, Zigbee^{™}, Bluetooth^{™}, and the like.

In one embodiment, the data acquisition device(s) 104 may also receive data from an aircraft computer 108 and/or an engine computer 106. This data will be collectively referred to as aircraft data, and denotes engine and/or aircraft performance parameters. The aircraft computer 108 may be an aircraft management controller (AMC), a flight management system (FMS), an aircraft digital computer system, or any other device used for computing inside an aircraft 100. The engine computer 106 may be any type of computing unit of an engine 10, such as an engine control unit (ECU), an engine electronic controller (EEC), an engine electronic control system, and a Full Authority Digital Engine Controller (FADEC). Data transmitted from the aircraft computer 108 and/or engine computer 106 to the data acquisition device(s) 104 (or vice versa) may be provided over a dedicated communication bus (e.g., a CAN bus) or any other existing communication system of the aircraft 100. Example data provided by the aircraft computer 108 comprises airspeed, altitude, stability, and position of the aircraft 100 at any point in time during a flight. Example data provided by the engine computer 106 comprises engine torque, engine speed, engine rating, engine torque stability, propeller speed stability, and engine compressor speed stability at any point in time during engine operation. The engine computer 106 may further be configured to detect fault(s) of the engine 10 (i.e. a physical fault that affects the thermodynamic performance of the engine 10 or a system fault) and accordingly generate engine fault data, which may also be sent to the data acquisition device(s) 104. It should however be understood that engine fault detection may alternatively be performed in the data acquisition device(s) 104, based on the data received from the sensor(s) 102, engine computer 106, and/or aircraft computer 108. In some embodiments, the sensor(s) 102 may be connected to or read by the engine computer 106 and/or the aircraft computer 108 such that the measurement(s) collected by the sensor(s) 102 are received by the data acquisition device(s) 104 from the engine computer 106 and/or the aircraft computer 108 (instead of directly from the sensor(s) 102).

The data received at the data acquisition device(s) 104 from the sensor(s) 102, engine computer 106, and/or aircraft computer 108 data is collectively referred to herein as "aviation data". In other words, the term "aviation data" refers to the sensor data received from the sensor(s) 102 and/or the aircraft data received from the aircraft computer 108 and/or the engine computer 106. The aviation data may be collected from one or more locations of the aircraft 100 and received at the data acquisition device(s) 104 in real-time or at regular intervals during a flight mission of the aircraft 100 or ground operation of the engine 10 and/or aircraft 100, based on specific operational conditions of the engine 10 and/or the aircraft 100. In other embodiments, the data acquisition device(s) 104 receive data from the sensor(s) 102, engine computer 106, and/or aircraft computer 108 at the end of the aircraft's flight mission. As used herein, the term "mission" refers to a flight to perform a specific task. The mission may be defined by various parameters, such as duration, destination, cargo, and any flying parameters to be used during the mission, such as speed or maximum altitude. For example, operator X may have aircraft A and B fly at a cruise speed of Mach 0.7 while aircraft C flies at a cruise speed of Mach 0.82. The value associated for the flight criteria "speed" may therefore differ between aircraft A and B and aircraft C. In some embodiments, operator X may define a unique set of flight criteria and associated values for each flight of an aircraft as a function of the specific flight parameters of a given flight, such as speeds, cruising altitudes, etc.

A data acquisition device 104 may take various forms, such as a Data Acquisition and Transmission Unit (DCTU), a Flight Data Acquisition Storage and Transmission (FAST^{™}) system, as manufactured by Pratt & Whitney Canada, or any other computer-controlled unit that receives data from various sensors and/or aircraft and engine systems. It should be understood that, while FIG. 1B illustrates (for clarity purposes) and the description below describes a single data acquisition device 104, more than one unit as in 104 may be provided. Indeed, in some embodiments, a plurality of data acquisition devices as in 104 may be installed in (e.g., mounted to) the aircraft 100 and/or the engine 10 and the systems and methods described herein may be used to enable secure interaction with a network of (e.g., interconnected) data acquisition systems (such as the devices 104) in and around the aircraft 100.

A data acquisition device 104 may comprise one or more antenna, one or more processors, and a memory (none shown). The processor(s) may be coupled to one or more data buses of the aircraft 100 for receiving the aviation data from the sensor(s) 102, engine computer 106, and/or aircraft computer 108. As previously noted, the aviation data may be transmitted to and received at the data acquisition device 104 using any suitable wired or wireless communication path. In some embodiments, the data acquisition device 104 is configured to process the received aviation data. The data acquisition device 104 may perform a conversion of the aviation data to a digitized form if received in analog form. It should however be understood that digitization of the aviation data may alternatively be performed by a dedicated device provided on the aircraft 100 separately from the data acquisition device 104. In some embodiments, the data acquisition device 104 may be configured to store the received aviation data in memory.

The data acquisition device 104 may be configured to transmit the aviation data to a server or other computing device (not shown) located remotely from the aircraft 100 (e.g., on the ground), using any suitable communication means (e.g. wireless communication). The wireless communication may be established upon engine start up with the aircraft 100 parked, after completion of a flight mission of the aircraft 100, or after engine shutdown. For example, the data acquisition device 104 may transmit the aviation data off-aircraft to a remote data and application server. This may occur without any human intervention, when the wireless communication is available at the destination point of the aircraft 100. As will be described further below, the aviation data may also be transmitted off-aircraft from the data acquisition device 104 to one or more client device(s) (also referred to herein as user device(s)) 110, upon the client device(s) 110 requesting access to the aviation data. The data acquisition device 104 may be configured to establish communication with the client device(s) 110, over a communication link 112. In one embodiment, the data acquisition device 104 is configured to communicate with more than one client device 110, although not necessarily with more than one type of client device 110 at one time. In one embodiment, the communication link 112 is wireless. As used herein, the term "wireless" refers to the transfer of information (or data) between two points that are not connected by an electrical conductor. Any suitable wireless technology may be used to establish a wireless connection as in 112 including, but not limited to, radio waves (e.g., VHF radio, HF radio), Bluetooth^{™}, Ultra-wideband (UWB), mobile broadband, wireless spread spectrum such as Wi-Fi (Standardized as IEEE 802.11 a, b, g, n, ac, ax), cellular data service, and satellite communication (SATCOM), and the like. In other embodiments, the communication link 112 may be wired (e.g., USB, Ethernet, or the like). For example, upon landing of the aircraft 100, the user may connect their client device 110 to the data acquisition device 104 using any suitable wired connection (e.g. USB, Ethernet, or the like) for the purpose of manually retrieving the aviation data from the memory of the data acquisition device 104 and downloading the retrieved aviation data onto their client device 110.

As will be described further below, the systems and methods described herein provide the client device(s) 110 access to the aviation data using passwords. For this purpose, prior to authorizing access to the aviation data, passwords (referred to herein as "password data") is used to authenticate the client device(s) 110 requiring access to the aviation data. The authentication procedure may be performed at the data acquisition device 104, the engine computer 106, the aircraft computer 108, or any other suitable computing device (not shown) communicatively coupled to the data acquisition device 104. As will also be described further below, the password data is rendered on one or more displays 114 provided in a secure location of the aircraft 100, the display(s) 114 being accessible to the user(s) associated with the client device(s) 110. The password data may be simultaneously rendered on multiple displays 114. In one embodiment, the display(s) 114 are provided in the cockpit of the aircraft 100 and are controlled by the aircraft computer 108. For example, the display(s) 114 may be the flight display or any other display provided in the cockpit. It should however be understood that the display(s) 114 may be provided in any suitable location of the aircraft 100 other than the cockpit. For example, the display(s) 114 may be provided outside of the cockpit, in a locked cabin or a secured compartment located in the aircraft 100. Although not illustrated, the display(s) 114 may also be mounted in the data acquisition device 104 or adjacent thereto. The display(s) 114 may also be associated with the engine computer 106. Upon the user accessing the display(s) 114 (e.g., by entering in the cockpit) and viewing the password data displayed thereon, the user may then enter the password data using any suitable input device (e.g., a keyboard, touchscreen, or the like) associated with their client device 110. The input data from the client device 110 is then received at the computing device provided on-board the aircraft 100 (i.e. at the data acquisition device 104, the engine computer 106, the aircraft computer 108, or any other suitable computing device) and compared to the password data. The client device 110 is provided access to the aviation data when the input data matches the password data.

The client device(s) 110 comprise any portable or handheld communication device, such as a smartphone, a desktop computer, a portable (or laptop) computer, a tablet, a hand-held electronic device, an electronic flight bag, or the like, adapted to communicate over the communication link 112. In one embodiment, the client device(s) 110 are external to the aircraft 100 and provided for maintenance (e.g., troubleshooting) purposes. It should be understood that the client device(s) 110 may, in some embodiments, be located within the aircraft 100. Maintenance personnel may use their client device 110 to access the data acquisition device 104 and retrieve the aviation data therefrom for the purpose of performing maintenance on the engine 10 to troubleshoot malfunctions. Fault codes and associated indication messages contained in the aviation data collected by the data acquisition device 104 may be accessed and used to direct maintenance efforts, which may be performed while the aircraft 100 on the ground. After carrying out appropriate corrective actions or responses to each fault code, the maintenance personnel may update maintenance logs (or records) associated with the engine 10 and/or the aircraft 100. The maintenance record(s) may be indicative of date(s) and time(s) at which engine and/or aircraft maintenance has been performed. In another embodiment, the client device(s) 110 may be used to access the data acquisition device 104 and retrieve the aviation data therefrom for the purpose of performing a data recording operation (e.g. reviewing of in-flight data from live engine testing) while the aircraft 100 is in flight. Other embodiments may apply.

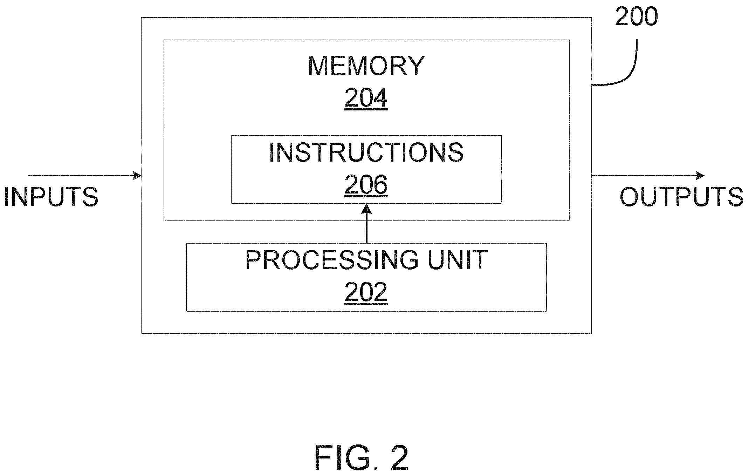

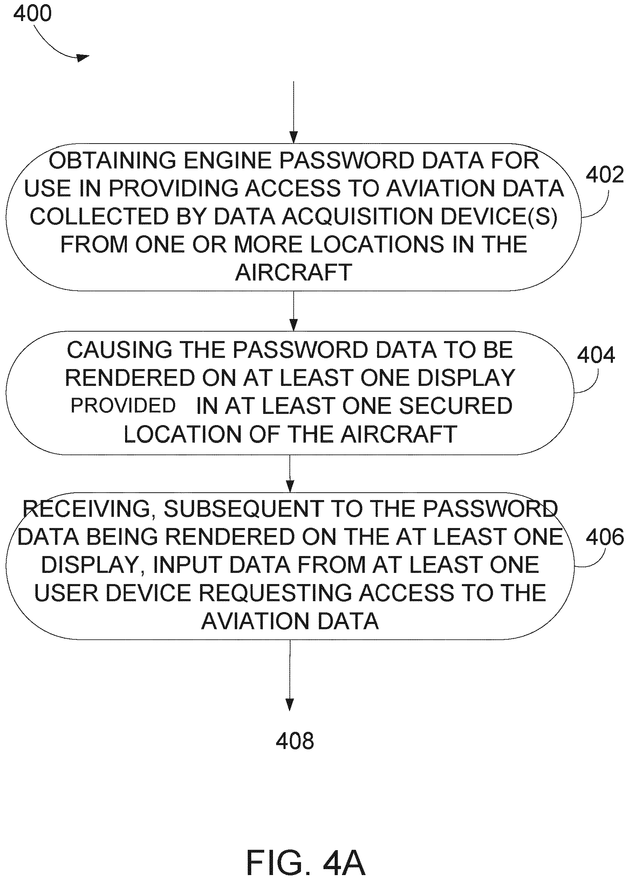

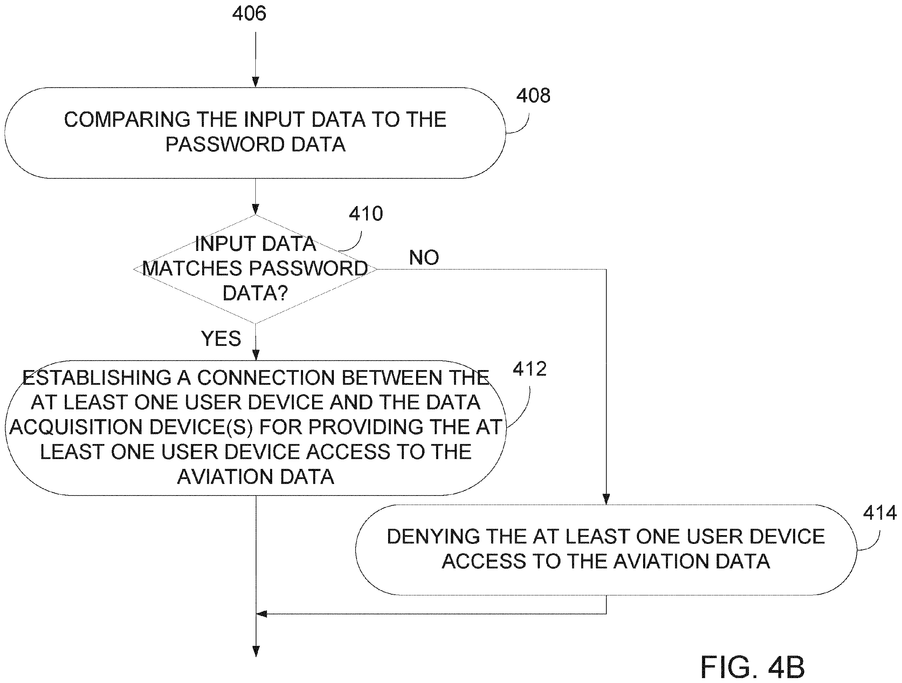

With reference to FIG. 2, an example of a computing device 200 is illustrated. For simplicity only one computing device 200 is shown but more computing devices 200 operable to exchange data may apply. The computing devices 200 may be the same or different types of devices. Each of the data acquisition device(s) (reference 104 in FIG. 1B), the engine computer (reference 106 in FIG. 1B), and the aircraft computer (reference 108 in FIG. 1B) may be implemented with one or more computing devices 200. The computing device 200 may also be used to implement the method described herein (e.g., the method 400 of FIG. 4A and FIG. 4B).

The computing device 200 comprises a processing unit 202 and a memory 204 which has stored therein computer-executable instructions 206. The processing unit 202 may comprise any suitable devices configured to implement the method 400 such that instructions 206, when executed by the computing device 200 or other programmable apparatus, may cause the functions/acts/steps performed as part of the method 400 as described herein to be executed. The processing unit 202 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 204 may comprise any suitable known or other machine-readable storage medium. The memory 204 may comprise non-transitory computer readable storage medium, for example, but not limited to, an electronic, magnetic, optical, electromagnetic, infrared, or semiconductor system, apparatus, or device, or any suitable combination of the foregoing. The memory 204 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 204 may comprise any storage means (e.g., devices) suitable for retrievably storing machine-readable instructions 206 executable by processing unit 202.

The instructions 206 may be implemented in a high level procedural or object oriented programming or scripting language, or a combination thereof, to communicate with or assist in the operation of a computer system, for example the data acquisition device(s) 104. Alternatively, the instructions 206 may be implemented in assembly or machine language. The language may be a compiled or interpreted language. The instructions 206 may be readable by a general or special-purpose programmable computer.

The methods and systems described herein may be implemented in a high level procedural or object oriented programming or scripting language, or a combination thereof, to communicate with or assist in the operation of a computer system, for example the computing device 200. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 202 of the computing device 200, to operate in a specific and predefined manner to perform the functions described herein, for example those described in the method 400.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

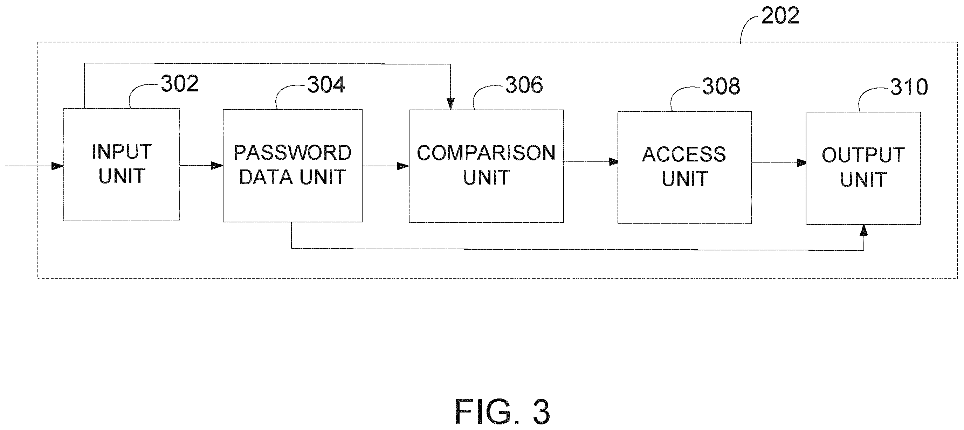

Referring now to FIG. 3 in addition to FIG. 1B, the processing unit 202 illustratively comprises an input unit 302, a password data unit 304, a comparison unit 306, an access unit 308, and an output unit 310. The processing unit 202 may be provided as part of the data acquisition device(s) 104, the engine computer 106, or the aircraft computer 108. Although the input unit 302, the password data unit 304, the comparison unit 306, the access unit 308, and the output unit 310 are illustrated as being separate from one another, it should be understood that units 302, 304, 306, 308, and 310 may be integrated together into one or more units.

The input unit 302 illustratively comprises a data interface (not shown) configured to receive, directly or indirectly, data from the sensor(s) 102, the data acquisition device(s) 104, the engine computer 106, the aircraft computer 108 (e.g., via one or more data buses, connectors, and the like, as described herein above), and/or the client device(s) 110 (e.g., via the communication link 112). In some embodiments, the input unit 302 may be configured to digitize the data if received in analog form.

In response to a data acquisition device 104 being powered on, a command (referred to herein as a "system-initiated command") may be output (e.g., by the data acquisition device 104, the engine computer 106 or the aircraft computer 108). The system-initiated command comprises instructions to cause new password data to be obtained for the purpose of providing the at least one client device 110 with access to aviation data collected by the data acquisition device 104. It should however be understood that the password data may alternatively be obtained in response to a command (referred to herein as a "user-initiated command") generated as a result of an action by a user, regardless of whether the data acquisition device 104 is being powered on. For example, the user-initiated command may be output as a result of a user (e.g., a pilot) actuating a button, switch, knob, or other input or control means provided in the cockpit (or other suitable location) of the aircraft 100. The command (i.e. the user-initiated command or the system-initiated command) is received at the input unit 302, which in turn sends the command to the password data unit 304 for password data to be obtained.

In one embodiment, the password data unit 304 may be part of the data acquisition device 104 such that the password data is obtained (e.g., dynamically generated) by the latter. The password data unit 304 may alternatively be part of the engine computer 106 and/or the aircraft computer 108 such that the password data is obtained (e.g., dynamically generated) by the latter. For example, the EEC may be configured to generate the password data. One or more computing devices may also be configured to obtain (e.g. dynamically generate) the password data. For example, first password data (e.g. a first random string of characters) may be generated by the engine computer 106 and second password data (e.g. a second random string of characters) may be generated by the aircraft computer 108. The first and second password data may then be combined (e.g., concatenated) in order to form further password data that is then used to provide access to the aviation data.

In one embodiment, the password data unit 304 obtains the password data by generating a random string of characters using any suitable technique. For example, the password data unit 304 may be configured to implement a random password generator (e.g., a random number generator) that dynamically generates the password data (e.g., comprising a random sequence of numbers) upon receipt of the command. In another embodiment, the password data unit 304 may be configured to access a memory (or other suitable storage) communicatively coupled thereto and to retrieve therefrom the password data. Password data (e.g., random strings of characters) may indeed be generated in advance (i.e. ahead of the data acquisition device 104 being powered and of the command being received) and stored in the memory for subsequent retrieval by the password data unit 304. In one embodiment, the password data unit 304 may be configured to rotate through pre-generated (e.g., random) passwords stored in memory upon receipt of the command to obtain the password data. For example, the password data unit 304 may retrieve from memory a first pre-generated password upon receipt of a first command. The next time a command is received, the password data unit 304 may retrieve from the memory a second pre-generated password (different from the first pre-generated password). The second pre-generated password may be randomly selected and retrieved from the memory or selected according to any suitable logic that ensures that different passwords at retrieved at any given time and that the passwords are rotated. It should be understood that the password data unit 304 may also be configured to obtain fixed (i.e. non random) password data for use in providing access to the aviation data.

In some embodiments, new password data is obtained by the password data unit 304 each time a command is received from the input unit 302, e.g. during power on initialization of the data acquisition device 104. In one embodiment, changing the password every time the data acquisition device 104 is powered on may ensure that the password cannot be written down or remembered by a user. This may enhance security in the event that users who were previously authorized to connect to the data acquisition device 104 are no longer authorized (e.g., after having changed jobs). Once a client device 110 is authorized to connect to the data acquisition device 104 to access the aviation data, the password data may remain the same for a predetermined time duration (e.g., 12 hours, 24 hours, or any other suitable duration). In this manner, users may be prevented from having to repeatedly enter new passwords while performing a given action (e.g., a maintenance task on the aircraft 100). In addition, the risk of forgetting or losing the password may be decreased. Moreover, by rendering the password data in a secured location of the aircraft 100 (e.g., in the cockpit), it can be ensure that only user(s) having had physical access to the secured location are authorized to connect to the data acquisition device(s) 104. Therefore, a client device 110 within communication range of the data acquisition device(s) 104 may not be authorized to establish a secure connection with the data acquisition device(s) 104 and access the aviation data unless the user can view the password data by physically accessing the secured location of the aircraft 100 (e.g., by entering the cockpit).

In one embodiment, the password data is numeric and each password comprises a string of numerical characters. In another embodiment, the password data is numeric and each password comprises a string of alphabetical characters. In other embodiments, alphanumeric password data may be used where each password comprises a string of alphanumeric characters. In yet other embodiments, special characters may be used as part of the password. It should be understood that the password data may be any suitable combination of numerical, alphabetical, alphanumerical, and/or special characters. It should also be understood that symbols may also be used. The length of each password may vary depending on the engine and/or aircraft configuration and on the application. For example, the password data may comprise a string of four (4) to sixteen (16) characters. Other embodiments may apply.

The password data obtained (i.e. generated or retrieved from memory) by the password data unit 304 is then sent to the output unit 310 for rendering on the display(s) 114 provided on-board the aircraft 100. The output unit 310 may be configured to format the password data for rendering on the display(s) 114. In some embodiments, the password data may be rendered on the display(s) 114 for a pre-determined duration (e.g., a few minutes). In some embodiments, the password data unit 304 may be provided as part of the data acquisition device 104 such that the latter generates the password data and communicates it (using the output unit 310) to the engine computer 106. The engine computer 106 then communicates the password data to the aircraft computer 108 which causes the password data to be rendered on the display(s) 114. In other embodiments, the password data unit 304 may be provided as part of the data acquisition device 104 such that the latter generates the password data and communicates it (using the output unit 310) to the display(s) 114 via an intermediary device other than the engine computer 106 or the aircraft computer 108. For example, a crash recording device communicatively coupled to the data acquisition device 104 may be used as the intermediary device. A laptop interface may alternatively be used to transmit the password data from the data acquisition device 104 to the display(s) 114. In yet other embodiments, the data acquisition device 104 may be configured to directly transmit the password data to the display(s) 114. Other embodiments may apply.

When a user wishes to access the aviation data collected by the data acquisition device 104, the user may then physically access the secured location in which the display(s) 114 are provided in order to view the password data. The user may then enter, using a suitable input device (e.g., keyboard, touchscreen, or the like) associated with their client device 110, input data indicative of a request to access the aviation data. For this purpose, a suitable graphical user interface may be presented on the client device 110 to enable the user to gain access to the aviation data and the input data may be entered via the graphical user interface. Alternatively, the client device 110 may access a secured web portal or a webpage (e.g. an engine maintenance webpage) and enter the input data therein in order to be provided access to the aviation data. The input data is then received at the input unit 302 and sent, along with the password data (generated or retrieved from memory by the password data unit 304), to the comparison unit 306.

In order for the user to be authenticated and authorized access to the aviation data, the input data entered by the user should comprise the password data rendered on the display(s) 114. The comparison unit 306 therefore compares the input data to the password data to assess whether the input data matches (i.e. is the same as) the password data. The comparison unit 306 may then provide the outcome of the comparison to the access unit 308, which may be configured to authorize or deny access to the aviation data based on the outcome of the comparison. The access unit 308 may further be configured to generate an indication (or notification) of whether access is granted or denied and send this indication to the output unit 310 for output on the client device 110. The output unit 310 causes the indication to be output to the client device 110 using any suitable means. For example, the indication may be output in a visual manner, e.g. rendered on a screen of the client device 110 or transmitted, using any suitable communication means, as a text message, email, or the like, to the client device 110. An audible indication may also be output using any suitable output means (e.g., a speaker) associated with the client device 110.

When the input data fails to match (i.e. differs from) the password data and data access is to be denied, the access unit 308 may be configured to generate a message or an alert indicating that access to the aviation data has been denied due to a wrong password having been entered. When the input data matches the password data and data access is to be granted, the access unit 308 is configured to generate an indication to this effect. The indication is then sent from the access unit 308 to the output unit 310, which may cause the indication to the be output to the client device(s) 110 as described herein above. The output unit 310 may also generate a control signal to allow or prevent the client device 110 to be provided access to the aviation data. For example, when access is granted, the control signal may comprise instructions for allowing a secure connection to be established between the data acquisition device 104 and the client device 110 for routing the aviation data from the data acquisition device 104 to the client device 110 over the connection. The secure connection may be established using any suitable means. For example, in some embodiments, a virtual private network (VPN) may be used. In one embodiment, the connection is a wireless connection, as described herein above. It should however be understood that, in some embodiments, the connection may alternatively be a wired connection. When access is denied, the control signal may comprise instructions for preventing establishment of the connection between the data acquisition device 104 and the client device 110.

Referring now to FIG. 4A and FIG. 4B, a method 400 for providing access to data from an aircraft, such as the aircraft 100 of FIG. 1B, will now be described in accordance with one embodiment. The method 400 may be performed at any one of the data acquisition device(s) (reference 104 of FIG. 1B), the engine computer (reference 106 of FIG. 1B), or the aircraft computer (reference 108 of FIG. 1B), or any other suitable computing device communicatively coupled to the data acquisition device(s). The method 400 comprises, at step 402, obtaining password data for use in providing access to aviation data collected from one or more locations in the aircraft (e.g., from sensor(s) 102, engine computer 106, and/or aircraft computer 108 of FIG. 1B) by one or more mounted data acquisition devices, which may be aircraft- or engine-mounted. As described herein above, in some embodiments, obtaining the password data comprises generating a random string of characters forming the password data. In other embodiments, obtaining the password data comprises retrieving the password data from a memory communicatively coupled to the computing device performing the method 400. Obtaining the password data further comprises obtaining new password data upon receipt of a system-initiated command, the system-initiated command being generated by the data acquisition device(s) (or the engine computer, the aircraft computer, or any other suitable computing device communicatively coupled to the data acquisition device(s)) in response to the data acquisition device(s) being powered on.

At step 404, the password data is caused to be rendered on at least one display provided in at least one secured location of the aircraft. In one embodiment, the password data is caused to be rendered on the at least one display provided in a cockpit of the aircraft. It should however be understood that the password data may be rendered on any other suitable display provided in a secured location of the aircraft. Step 406 comprises receiving, subsequent to the password data being rendered on the at least one display, input data from at least one user device requesting access to the aviation data. Step 408 then comprises comparing the input data to the password data obtained at step 402. At step 410, a determination is made as to whether the input data matches (i.e. is the same as) the password data. If this is the case, a secure connection is established between the at least one user device and the data acquisition device(s) for providing the at least one user device access to the aviation data at step 412. In one embodiment, step 412 comprises establishing a wireless connection between the data acquisition device(s) and the at least one user device for routing the aviation data from the data acquisition device(s) to the at least one user device via the wireless connection. Otherwise, if the input data fails to match the password data, the at least one user device is denied access to the aviation data at step 414. Step 414 may comprise preventing establishment of the wireless connection between the data acquisition device(s) and the at least one user device.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A data access method (400) for an aircraft (100), the method (400) comprising:
obtaining (402), at a computing device (200), password data for use in providing access to aviation data collected by at least one data acquisition device (104) from one or more locations in the aircraft (100), the obtaining password data comprising obtaining new password data upon receipt of a system-initiated command generated by the at least one data acquisition device (104) in response to the at least one data acquisition device (104) being powered on;
causing (404), at the computing device (200), the password data to be rendered on at least one display (114) provided in at least one secured location of the aircraft (100);
receiving (406), at the computing device (200), subsequent to the password data being rendered on the at least one display (114), input data from at least one user device (110) requesting access to the aviation data;
comparing (408), at the computing device (200), the input data to the password data; and
when the input data matches the password data, establishing (412), at the computing device (200), a connection between the at least one user device (110) and the at least one data acquisition device (104) for providing the at least one user device (110) access to the aviation data.

2. The method (400) of any preceding claim, wherein the password data is caused to be rendered on the at least one display (114) provided in a cockpit of the aircraft (100).

3. The method (400) of any preceding claim, wherein a wireless connection (112) is established between the at least one data acquisition device (104) and the at least one user device (110) for routing the aviation data from the at least one data acquisition device (104) to the at least one user device (110) via the wireless connection (112).

4. The method (400) of any preceding claim, wherein the at least one user device (110) is provided access to the aviation data for performing a maintenance operation while the aircraft (100) is on ground.

5. The method (400) of any of claims 1 to 3, wherein the at least one user device (110) is provided access to the aviation data for performing a data recording operation while the aircraft (100) is in flight.

6. The method (400) of any preceding claim, wherein the aviation data is collected by the at least one data acquisition device (104) from one or more sensors (102), an engine computer (106), and/or an aircraft computer (108) during operation of the aircraft (100) in-flight.

7. A data access system for an aircraft (100), comprising:
a processing unit (202); and
a non-transitory computer-readable medium (204) having stored thereon instructions (206) executable by the processing unit (202) for:
obtaining (402) password data for use in providing access to aviation data collected by at least one data acquisition device (104) from one or more locations in the aircraft (100);
causing (404) the password data to be rendered on at least one display (114) provided in at least one secured location of the aircraft (100);
receiving (406), subsequent to the password data being rendered on the at least one display (114), input data from at least one user device (110) requesting access to the aviation data;
comparing (408) the input data to the password data; and
when the input data matches the password data, establishing (412), at the computing device (200), a connection between the at least one user device (110) and the at least one data acquisition device (104) for providing the at least one user device (110) access to the aviation data,
**characterised in that**:
the instructions (206) are executable by the processing unit (202) for obtaining the password data comprising obtaining new password data upon receipt of a system-initiated command generated by the at least one data acquisition device (104) in response to the at least one data acquisition device (104) being powered on.

8. The system of claim 7, wherein the instructions (206) are executable by the processing unit (202) for causing the password data to be rendered on the at least one display (114) provided in a cockpit of the aircraft (100).

9. The system of claim 7 or 8, wherein the instructions (206) are executable by the processing unit (202) for establishing the connection comprising establishing a wireless connection (112) between the at least one data acquisition device (104) and the at least one user device (110) for routing the aviation data from the at least one data acquisition device (104) to the at least one user device (110) via the wireless connection (112).

10. The system of any one of claims 7 to 9, wherein the instructions (206) are executable by the processing unit (202) for providing the at least one user device (110) access to the aviation data for performing a data recording operation while the aircraft (100) is in flight.

11. The system of any one of claims 7 to 9, wherein the instructions (206) are executable by the processing unit (202) for providing the at least one user device (110) access to the aviation data for performing a maintenance operation while the aircraft (100) is on ground.

12. The system of any one of claims 7 to 11, wherein the aviation data is collected by the at least one data acquisition device (104) from at least one of one or more sensors (102), an engine computer (106), and an aircraft computer (108) during operation of the aircraft (100) in-flight.

## Patentansprüche

1. Datenzugriffsverfahren (400) für ein Luftfahrzeug (100), wobei das Verfahren (400) umfasst:
Erhalten (402), an einer Rechenvorrichtung (200), von Passwortdaten zur Verwendung beim Bereitstellen eines Zugriffs auf Luftfahrtdaten, die von mindestens einer Datenerfassungsvorrichtung (104) an einem oder mehreren Orten in dem Luftfahrzeug (100) erfasst werden, wobei das Erhalten von Passwortdaten das Erhalten neuer Passwortdaten nach Empfang eines vom System initiierten Befehls umfasst, der von der mindestens einen Datenerfassungsvorrichtung (104) als Reaktion auf das Einschalten der mindestens einen Datenerfassungsvorrichtung (104) erzeugt wird;
Bewirken (404), an der Rechenvorrichtung (200), dass die Passwortdaten auf mindestens einer Anzeige (114) dargestellt werden, die an mindestens einem gesicherten Ort des Luftfahrzeugs (100) vorgesehen ist;
Empfangen (406), an der Rechenvorrichtung (200), nachdem die Passwortdaten auf der mindestens einen Anzeige (114) dargestellt wurden, von Eingabedaten von mindestens einer Benutzervorrichtung (110), die Zugriff auf die Luftfahrtdaten anfordert;
Vergleichen (408), an der Rechenvorrichtung (200), der Eingabedaten mit den Passwortdaten; und
wenn die Eingabedaten mit den Passwortdaten übereinstimmen, Herstellen (412), an der Rechenvorrichtung (200), einer Verbindung zwischen der mindestens einen Benutzervorrichtung (110) und der mindestens einen Datenerfassungsvorrichtung (104), um der mindestens einen Benutzervorrichtung (110) Zugriff auf die Luftfahrtdaten bereitzustellen.

2. Verfahren (400) nach einem der vorhergehenden Ansprüche, wobei bewirkt wird, dass die Passwortdaten auf der mindestens einen Anzeige (114) dargestellt werden, die in einem Cockpit des Luftfahrzeugs (100) vorgesehen ist.

3. Verfahren (400) nach einem der vorhergehenden Ansprüche, wobei eine drahtlose Verbindung (112) zwischen der mindestens einen Datenerfassungsvorrichtung (104) und der mindestens einen Benutzervorrichtung (110) hergestellt wird, um die Luftfahrtdaten von der mindestens einen Datenerfassungsvorrichtung (104) über die drahtlose Verbindung (112) an die mindestens eine Benutzervorrichtung (110) weiterzuleiten.

4. Verfahren (400) nach einem der vorhergehenden Ansprüche, wobei der mindestens einen Benutzervorrichtung (110) Zugriff auf die Luftfahrtdaten zum Durchführen eines Wartungsvorgangs bereitgestellt wird, während sich das Luftfahrzeug (100) am Boden befindet.

5. Verfahren (400) nach einem der Ansprüche 1 bis 3, wobei der mindestens einen Benutzervorrichtung (110) Zugriff auf die Luftfahrtdaten zum Durchführen eines Datenaufzeichnungsvorgangs bereitgestellt wird, während sich das Luftfahrzeug (100) im Flug befindet.

6. Verfahren (400) nach einem der vorhergehenden Ansprüche, wobei die Luftfahrtdaten von der mindestens einen Datenerfassungsvorrichtung (104) von einem oder mehreren Sensoren (102), einem Triebwerksrechner (106) und/oder einem Luftfahrzeugrechner (108) während des Betriebs des Luftfahrzeugs (100) im Flug erfasst werden.

7. Datenzugriffssystem für ein Luftfahrzeug (100), umfassend:
eine Verarbeitungseinheit (202); und
ein nichttransitorisches computerlesbares Medium (204), auf dem Anweisungen (206) gespeichert sind, die durch die Verarbeitungseinheit (202) ausführbar sind zum:
Erhalten (402) von Passwortdaten zur Verwendung beim Bereitstellen eines Zugriffs auf Luftfahrtdaten, die von mindestens einer Datenerfassungsvorrichtung (104) an einem oder mehreren Orten in dem Luftfahrzeug (100) erfasst werden;
Bewirken (404), dass die Passwortdaten auf mindestens einer Anzeige (114) dargestellt werden, die an mindestens einem gesicherten Ort des Luftfahrzeugs (100) vorgesehen ist;
Empfangen (406), nachdem die Passwortdaten auf der mindestens einen Anzeige (114) dargestellt wurden, von Eingabedaten von mindestens einer Benutzervorrichtung (110), die Zugriff auf die Luftfahrtdaten anfordert;
Vergleichen (408) der Eingabedaten mit den Passwortdaten; und wenn die Eingabedaten mit den Passwortdaten übereinstimmen,
Herstellen (412), an der Rechenvorrichtung (200), einer Verbindung zwischen der mindestens einen Benutzervorrichtung (110) und der mindestens einen Datenerfassungsvorrichtung (104), um der mindestens einen Benutzervorrichtung (110) Zugriff auf die Luftfahrtdaten bereitzustellen,
**dadurch gekennzeichnet, dass**:
die Anweisungen (206) durch die Verarbeitungseinheit (202) zum Erhalten der Passwortdaten ausführbar sind, umfassend das Erhalten neuer Passwortdaten nach Empfang eines vom System initiierten Befehls, der von der mindestens einen Datenerfassungsvorrichtung (104) als Reaktion auf das Einschalten der mindestens einen Datenerfassungsvorrichtung (104) erzeugt wird.

8. System nach Anspruch 7, wobei die Anweisungen (206) durch die Verarbeitungseinheit (202) ausführbar sind, um zu bewirken, dass die Passwortdaten auf der mindestens einen Anzeige (114) dargestellt werden, die in einem Cockpit des Luftfahrzeugs (100) vorgesehen ist.

9. System nach Anspruch 7 oder 8, wobei die Anweisungen (206) durch die Verarbeitungseinheit (202) zum Herstellen der Verbindung ausführbar sind, umfassend das Herstellen einer drahtlosen Verbindung (112) zwischen der mindestens einen Datenerfassungsvorrichtung (104) und der mindestens einen Benutzervorrichtung (110), um die Luftfahrtdaten von der mindestens einen Datenerfassungsvorrichtung (104) über die drahtlose Verbindung (112) an die mindestens eine Benutzervorrichtung (110) weiterzuleiten.

10. System nach einem der Ansprüche 7 bis 9, wobei die Anweisungen (206) durch die Verarbeitungseinheit (202) ausführbar sind, um der mindestens einen Benutzervorrichtung (110) Zugriff auf die Luftfahrtdaten zum Durchführen eines Datenaufzeichnungsvorgangs bereitzustellen, während sich das Luftfahrzeug (100) im Flug befindet.

11. System nach einem der Ansprüche 7 bis 9, wobei die Anweisungen (206) durch die Verarbeitungseinheit (202) ausführbar sind, um der mindestens einen Benutzervorrichtung (110) Zugriff auf die Luftfahrtdaten zum Durchführen eines Wartungsvorgangs bereitzustellen, während sich das Luftfahrzeug (100) am Boden befindet.

12. System nach einem der Ansprüche 7 bis 11, wobei die Luftfahrtdaten von der mindestens einen Datenerfassungsvorrichtung (104) von mindestens einem von einem oder mehreren Sensoren (102), einem Triebwerksrechner (106) und einem Luftfahrzeugrechner (108) während des Betriebs des Luftfahrzeugs (100) im Flug erfasst werden.

## Revendications

1. Procédé d'accès à des données (400) pour un aéronef (100), le procédé (400) comprenant :
l'obtention (402), sur un dispositif informatique (200), de données de mot de passe à utiliser pour fournir un accès aux données aéronautiques collectées par au moins un dispositif d'acquisition de données (104) à partir d'un ou plusieurs emplacements dans l'aéronef (100), l'obtention de données de mot de passe comprenant l'obtention de nouvelles données de mot de passe lors de la réception d'une commande initiée par le système générée par l'au moins un dispositif d'acquisition de données (104) en réponse à la mise sous tension de l'au moins un dispositif d'acquisition de données (104) ;
le fait d'amener (404), sur le dispositif informatique (200), les données de mot de passe à être affichées sur au moins un écran (114) prévu dans au moins un emplacement sécurisé de l'aéronef (100) ;
la réception (406), sur le dispositif informatique (200), après l'affichage des données de mot de passe sur l'au moins un écran (114), de données d'entrée provenant d'au moins un dispositif utilisateur (110) demandant l'accès aux données aéronautiques ;
la comparaison (408), sur le dispositif informatique (200), des données d'entrée aux données de mot de passe ; et
lorsque les données d'entrée correspondent aux données de mot de passe, l'établissement (412), sur le dispositif informatique (200), d'une connexion entre l'au moins un dispositif utilisateur (110) et l'au moins un dispositif d'acquisition de données (104) pour permettre à l'au moins un dispositif utilisateur (110) d'accéder aux données aéronautiques.

2. Procédé (400) selon une quelconque revendication précédente, dans lequel les données de mot de passe sont amenées à être affichées sur l'au moins un écran (114) prévu dans le cockpit de l'aéronef (100).

3. Procédé (400) selon une quelconque revendication précédente, dans lequel une connexion sans fil (112) est établie entre l'au moins un dispositif d'acquisition de données (104) et l'au moins un dispositif utilisateur (110) pour acheminer les données aéronautiques depuis l'au moins un dispositif d'acquisition de données (104) vers l'au moins un dispositif utilisateur (110) via la connexion sans fil (112).

4. Procédé (400) selon une quelconque revendication précédente, dans lequel l'au moins un dispositif utilisateur (110) obtient l'accès aux données aéronautiques afin de réaliser une opération de maintenance alors que l'aéronef (100) est au sol.

5. Procédé (400) de l'une quelconque des revendications 1 à 3, dans lequel l'au moins un dispositif utilisateur (110) obtient l'accès aux données aéronautiques afin de réaliser une opération d'enregistrement de données pendant que l'aéronef (100) est en vol.

6. Procédé (400) selon une quelconque revendication précédente, dans lequel les données aéronautiques sont collectées par l'au moins un dispositif d'acquisition de données (104) à partir d'un ou plusieurs capteurs (102), d'un calculateur moteur (106) et/ou d'un calculateur de bord (108) pendant le fonctionnement de l'aéronef (100) en vol.

7. Système d'accès à des données pour un aéronef (100), comprenant :
une unité de traitement (202) ; et
un support non transitoire lisible par ordinateur (204) sur lequel sont stockées des instructions (206) exécutables par l'unité de traitement (202) pour :
obtenir (402) des données de mot de passe à utiliser pour permettre l'accès aux données aéronautiques collectées par au moins un dispositif d'acquisition de données (104) à partir d'un ou plusieurs emplacements dans l'aéronef (100) ;
amener (404) les données de mot de passe à être affichées sur au moins un écran (114) prévu dans au moins un emplacement sécurisé de l'aéronef (100) ;
recevoir (406), après l'affichage des données de mot de passe sur l'au moins un écran (114), des données d'entrée provenant d'au moins un dispositif utilisateur (110) demandant l'accès aux données aéronautiques ;
comparer (408) les données d'entrée aux données de mot de passe ; et
lorsque les données d'entrée correspondent aux données de mot de passe, établir (412), sur le dispositif informatique (200), une connexion entre l'au moins un dispositif utilisateur (110) et l'au moins un dispositif d'acquisition de données (104) pour permettre à l'au moins un dispositif utilisateur (110) d'accéder aux données aéronautiques,
**caractérisé en ce que** :
les instructions (206) sont exécutables par l'unité de traitement (202) afin d'obtenir les données de mot de passe comprenant l'obtention de nouvelles données de mot de passe lors de la réception d'une commande initiée par le système générée par l'au moins un dispositif d'acquisition de données (104) en réponse à la mise sous tension de l'au moins un dispositif d'acquisition de données (104).

8. Système selon la revendication 7, dans lequel les instructions (206) sont exécutables par l'unité de traitement (202) afin d'amener les données de mot de passe à être affichées sur l'au moins un écran (114) prévu dans le cockpit de l'aéronef (100).

9. Système selon la revendication 7 ou 8, dans lequel les instructions (206) sont exécutables par l'unité de traitement (202) afin d'établir la connexion comprenant l'établissement d'une connexion sans fil (112) entre l'au moins un dispositif d'acquisition de données (104) et l'au moins un dispositif utilisateur (110) pour acheminer les données aéronautiques depuis l'au moins un dispositif d'acquisition de données (104) vers l'au moins un dispositif utilisateur (110) via la connexion sans fil (112).

10. Système selon l'une quelconque des revendications 7 à 9, dans lequel les instructions (206) sont exécutables par l'unité de traitement (202) pour permettre à l'au moins un dispositif utilisateur (110) d'accéder aux données aéronautiques afin de réaliser une opération d'enregistrement de données pendant que l'aéronef (100) est en vol.

11. Système selon l'une quelconque des revendications 7 à 9, dans lequel les instructions (206) sont exécutables par l'unité de traitement (202) pour permettre à l'au moins un dispositif utilisateur (110) d'accéder aux données aéronautiques afin de réaliser une opération de maintenance pendant que l'aéronef (100) est au sol.

12. Système selon l'une quelconque des revendications 7 à 11, dans lequel les données aéronautiques sont collectées par l'au moins un dispositif d'acquisition de données (104) à partir d'au moins l'un d'un ou plusieurs capteurs (102), d'un calculateur moteur (106) et d'un calculateur de bord (108) pendant le fonctionnement de l'aéronef (100) en vol.
